# EUROPEAN PATENT APPLICATION

(11) **EP 4 099 262 A1**
(43) Date of publication of application: **07.12.2022**
(21) Application number: 21382492.3
(22) Date of filing: 02.06.2021
(51) Int. Cl.: G06Q 50/20, G09B 7/00, G06N 20/00

(54) **METHOD FOR ASSESSING SUBJECT KNOWLEDGE USING COLLECTIVE INTELLIGENCE IN COMBINATION WITH MACHINE LEARNING ALGORITHMS**

(71) Applicant: The Wise Seeker, S.L., 28034 Madrid (ES)
(72) Inventor: Santesmases Blanco, Juan, Madrid (ES); Ces Franjo, Jose Antonio, Madrid (ES)
(74) Representative: González López-Menchero, Álvaro Luis

(57) **Abstract**

Method for the evaluation of subjects knowledge using collective intelligence in combination with machine learning algorithms that comprises:
• Obtain, filter and classify questions, with their corresponding answers, of a knowledge of a given subject by means of artificial intelligence,
• Validate the questions and the answers generated, filtered and classified in the previous stage, using collective intelligence for the correct classification and ordering
• Review the questions validated in the previous stage for their use or discard.

## Description

### Technical field

The present invention belongs to the field of generating knowledge automatically and in a context of using this knowledge for the validation of what people know about certain subjects.

### Background

Building a test to validate knowledge in a certain subject using questions and answers is currently a manual task and it is exclusively restricted to people or groups of people who work in that field or that specific subject. This work is slow and it is usually biased towards the knowledge which that person or that small group of people have on this subject.

The method and the computer program described here automates the generation of questions and answers, using collective intelligence methods that have never been used up to now, which avoids having to search for those who know and, above all, guarantees its reliability and validity as it is a broad group of people who participates in the task, combining it with machine learning algorithms

### Description of the invention

The present invention provides an alternative to current knowledge evaluation methods by a computer-implemented method that combines machine learning algorithms with collective intelligence techniques.

In a first inventive aspect of the invention (claims 1, 14 and 15) the computer-implemented method, computer program and data processing device that executes said method comprises:
- Obtain, filter and classify questions, with their corresponding answers, of a knowledge of a given subject by means of artificial intelligence,
- Validate questions and the responses generated, filtered and classified in the previous stage, using collective intelligence for the correct classification and ordering
- Review the questions validated in the previous stage for their use or discard.

With the described method, machine learning algorithms are combined with collective intelligence techniques, to result in a system for capturing, classifying, using and discarding questions and answers aimed at validating knowledge.

In the stage of obtaining, filtering and classifying questions and answers, questions are obtained through a computer platform that produces questions and answers through two external sources: a first source formed by users who are part of an evaluation process which are obliged to provide questions, always within the framework of knowledge required by this process, and a second source made up of users who voluntarily provide questions through a space prepared for this.

The improvement that this method contributes means moving from the current state of the art, in which everything is manual and slow to make, towards a paradigm of automation and the elimination of biases due to niches.

A computer program, accessible from both a computer and a mobile phone, is what will support the method described and indicated in claim 1.

A computer program, aimed at having its users performing in different knowledge tests, bases a good part of its value on the quality of the questions and answers which it contains.

Since all these questions are generated by people or groups of people in a manual and specific way, these evaluations are permanently conditioned by who or who is in charge of this task. And, on the other hand, the fact that very few people accumulate sufficient knowledge of all the evaluable subjects, makes it impossible to guarantee uniformity between the evaluations carried out for each of the subjects that the system intends to evaluate.

The development of this method arises during the process of creating a computer program which tries to validate the knowledge of people in those matters that are considered necessary in the performance of a job. This program makes it easier for companies to hire professionals, to ensure their knowledge of certain subjects, as well as in the continuous evaluation of their professionals, who must maintain up-to-date knowledge adapted to the time in which their activity is developing.

In this contextual framework, obtaining the maximum number of evaluable knowledge and providing these evaluations with uniformity are the challenges that drive the conception of this method.

### Description of the figures

These and other characteristics and advantages of the invention will be better understood in view of the detailed description of the invention through a preferred embodiment, given as an example and not limiting the scope of the invention, with reference to the figures.
- Figure 1 This figure represents a multi-level knowledge structure that serves as an example and helps to understand the method developed here.
- Figure 2 This figure represents a flow diagram of the stage generation, filtering and classification of questions and their answers of the method of the invention.
- Figure 3 This figure represents a flow diagram of the validation stage of the method of the invention.
- Figure 4 This figure represents a flow diagram of the stage of use or discard of the questions and answers generated and validated in the previous stages of the method of the invention.

### Detailed description of the invention

To be able to explain in detail the method, the system and the computer program, it is necessary to review the flow of activities or events that arise as a result of its application.

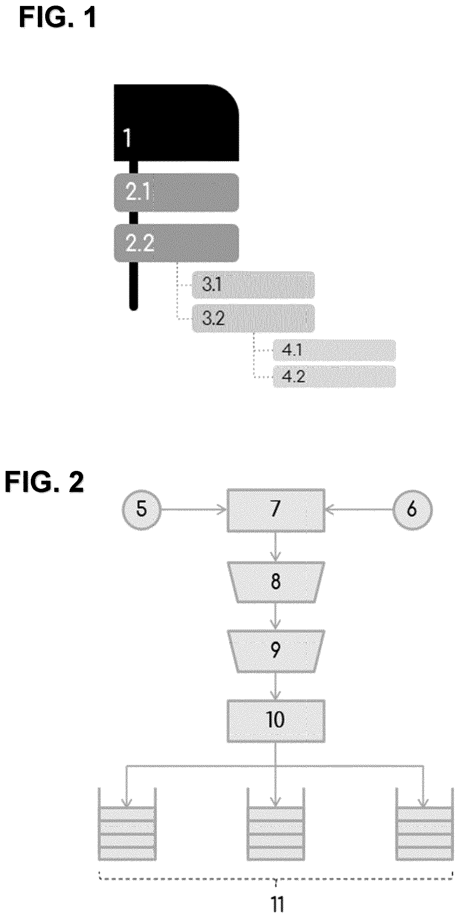

The following concepts must be taken into account when understanding the development of the method.
- Platform: It is a computer program whose purpose is the evaluation of certain users, based on a business motivation, either a selection process or an internal evaluation.
- User: This is the person who is evaluated in one or more subjects within the computer system or program that will support our method.
- "Wise": This is a group which is external to the platform that will be in charge of validating the questions and answers that are generated.
- Questions: It is an entity composed not only by the question, but also by the answers that will be provided to the user, indicating which of them is the correct one.
- Knowledge: It constitutes the basis of what we want to evaluate the user of. It is organized, as shown in Figure 1, in different knowledge aggregations (1) that are organized by disciplines (2.1 and 2.2), where the knowledge (3.1 and 3.3) are located, which in turn are composed, each one of them, for a set of subjects (4.1 and 4.2).

These elements interact with each other in a flow of events that complete the method described in the present invention, and which is presented below in a preferred, nonlimiting embodiment, from the generation of a single question to its validation and subsequent final discard. This particularization does not detract from any generality to the method, which will not be more than the sum of events equivalent to the one explained here.

The flow of tasks of the first stage of the method of the invention is outlined in Figure 2. In this first stage that includes the generation, filtering and classification of questions, the questions are originated in two ways within the platform:
- Source A (5) - The platform forces users who are part of an evaluation process to provide questions, always within the knowledge framework required by said process.
- Source B (6) - The users of the platform provide questions voluntarily (encouraged by the platform itself) through a space enabled for it.

From the set of questions that have been generated (7), each question must go through a series of filters that determine its validity and classify it according to the disciplines and knowledge groups that exist on the platform.
- The first filter (8) that is applied has to do with the knowledge of the user who generated that question. As these users will have been evaluated at the time the question is asked or in advance, a minimum threshold will be set in the grade of said knowledge, discarding this if the evaluated does not have a minimum grade in the evaluation.
- The second filter (9) uses existing libraries for the identification of words or messages out of context such as insults, obscenities, profanities and so. It is possible in this filter to carry out a syntactic analysis of the question-answers set, to determine if there is grammatical coherence between both.
- Finally, the third filter (10) will be able to associate this question with the different groupings, categories, knowledge and subjects (11), following the hierarchy mentioned above.

Although the first filter bases all its logic on the classification that the computer program has of the user who facilitates the question, the second and third filters will use automatic mechanisms for discarding and classifying questions. More specifically, a second filter based on language processing techniques is proposed, which will be capable of determining the grammatical and semantic coherence of the questions and the answers provided. And for the third filter, supervised learning machine learning algorithms are used, which are capable of classifying the questions according to the knowledge structure that has been defined in advance.

In supervised learning, the machine learns by the example which is provided by a set of known data that includes the desired inputs and outputs. The algorithm identifies patterns in the data, learns from observations, and makes predictions, until it reaches a high level of precision and performance.

The result of this first complete step is a set of questions, with their corresponding answers, which, useful or not, will have an adequate structure and will have been classified according to a hierarchy, as shown in Figure 1, in an aggregation (1), a discipline (2.1 and 2.2), a knowledge (3.1 and 3.2) and a subject (4.1 and 4.2).

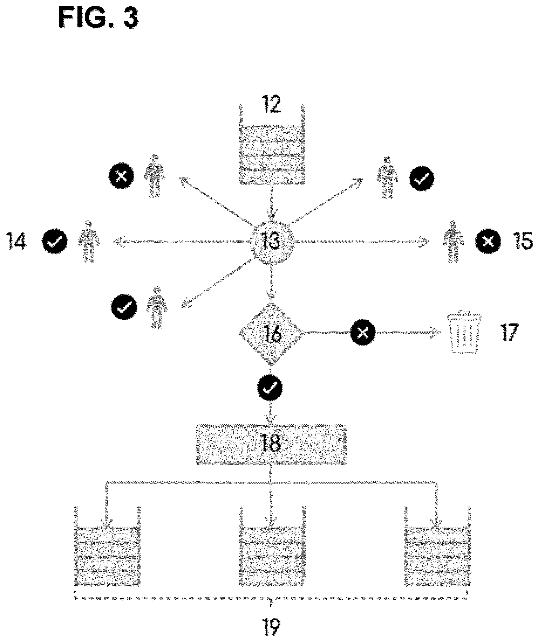

In the second stage, the knowledge questions, generated in the previous stage, are validated using collective intelligence. The flow of tasks for this second step is outlined in Figure 3.

It is in this second stage that the method uses collective intelligence mechanisms to validate the questions, before they are used in the evaluations.

To be able to detail its operation, it is necessary to understand well the role of the "wise" on the platform. The wise is a platform user who acquires this status as a consequence of having obtained a high grade in a certain knowledge. A wise person will be, therefore, related to one or more knowledge.

When the questions are classified within a knowledge (12), they are sent to all the "wise" of that knowledge (13). The wise person receives it on his account, it could be a mobile phone or a computer, where he validates it (14) or discards it (15), using a simple and effective interaction mechanism that will be implemented in the application itself.

The computer system collects the set of responses from all the wise (16) and, depending on the collective opinion, what is known as collective intelligence, removes it from the flow (17) or accepts it (18) and classifies it according to the matter to which it belongs (19).

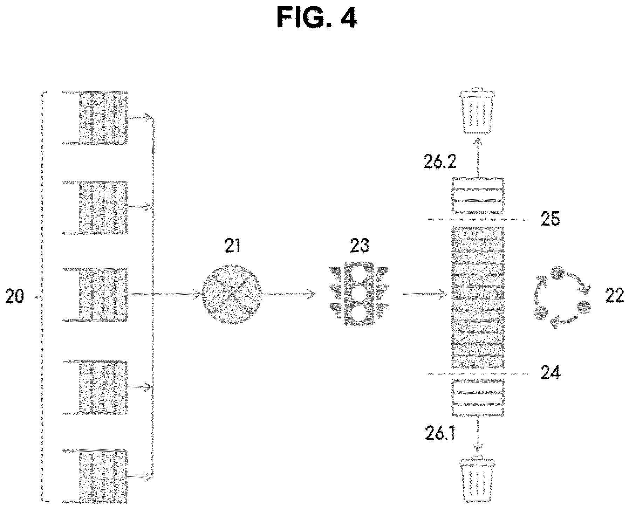

The third stage of the method of the invention is the stage of using and discarding questions within the evaluation based on their difficulty. The flow of tasks for this third step is outlined in Figure 4.

Once the question has been validated by the group of wise people, it will become a question ready for use within the evaluations. Derived from the previous actions, the computer program will guarantee that all the subjects (20) within a knowledge are evaluated, for which it will monitor the number of questions associated with a subject within a knowledge (21). If, for example, a knowledge has five subjects, assuming that it must contain 150 questions, each of the corresponding subjects must be validated with 30 questions.

Within the evaluation, the question acquires a certain level of difficulty. For this, the times that it is answered well or badly by users in a permanent flow are analyzed (22). In this way, a question that a high number of users hits is classified in the low part, and another that everyone fails will be in the high part of the classification. The evaluation runs through this classification with an algorithm that increases the difficulty when the hits are repeated and lowers it when the misses begin.

To guarantee that the evaluations are updated, there is an access control mechanism (23) that acts when new questions appear on a given subject, with two mechanisms for their renewal.
- The first one has to do with the expiration of the questions, which establishes a conditional in the algorithm according to a time scheme, known as limited validity, or due to the accumulation of new questions that will expel those that have been in the system for the longest time.
- The second one has to do with the validity of the question in the discrimination function that an evaluation has. When conducting an assessment, the important thing is to be able to determine a person's knowledge regarding others. Therefore, if a question is right or wrong by a whole group, it will not fulfill its function. In order to apply this second discard method, two thresholds are established in the algorithm, a lower one (24) and a higher one (25), depending on their difficulty. The questions that fall outside these two thresholds will be discarded (26.1 and 26.2) for new questions.

## Claims

1. A Computer-implemented method for the evaluation of knowledge of subjects in an automatic way comprising:
• Obtain, filter and classify questions, with their corresponding answers, of a knowledge of a given subject by means of artificial intelligence,
• Validate the questions and the responses generated, filtered and classified in the previous stage, using collective intelligence for the correct classification and ordering
• Review the questions validated in the previous stage for their use or discard.

2. The Method according to claim 1 in which the stage of obtaining, filtering and classifying questions and answers comprises obtaining questions through a computer platform.

3. The Method according to claim 2 in which the platform obtains questions and answers through two sources: a first source formed by users who are part of an evaluation process who are obliged to contribute questions, always within the framework of knowledge required by this process, and a second source made up of users who voluntarily provide questions through a space set up for it.

4. The Method according to claims 1-3 in which once the questions and answers have been obtained, a first filter of knowledge of the user that has generated the question is carried out in which the user is initially evaluated by means of the classification that the computer program has of the user who facilitates the question, and a minimum threshold is set in the mark of said knowledge, discarding this if the evaluated does not have a minimum mark in said evaluation.

5. The Method according to claims 1-4 in which a filter is made of the questions obtained using existing libraries for the identification of words or messages out of context such as insults, obscenities, blasphemies and the like as well as a syntactic analysis of the question set -answers, to determine if there is grammatical coherence between the two by means of automatic mechanisms for discarding and classifying questions.

6. The Method according to claim 5 in which the filter uses language processing techniques capable of determining the grammatical and semantic coherence of the question and the answers provided.

7. The Method according to claims 1-4 in which a filter of the questions obtained is made by associating each question with the different groupings, categories, knowledge and subjects, by means of automatic mechanisms for discarding and classifying questions.

8. The Method according to claim 7 in which the filter uses supervised learning machine algorithms capable of classifying the question according to the knowledge structure that has been defined in advance.

9. The Method according to claim 8 in which in supervised learning, the machine learns with the example that provides a set of known data that includes the desired inputs and outputs and an algorithm identifies patterns in the data, learns from the observations and makes predictions, up to a high level of accuracy and performance.

10. The Method according to claims 2-9 in which wise people are defined from platform users who acquire the status of wise as a consequence of having obtained a high grade in a certain knowledge during a collective intelligence process so when the question has been validated by the group of wise people, it will become a question ready for use within the evaluations.

11. The Method according to claim 10 in which once the questions are classified within a knowledge, in any of its subjects, they are sent to all the wise people of that knowledge, who will receive it on their mobile or computer account, where it will be validated or discarded, using an interaction mechanism implemented in the application itself that includes a computer system that collects the set of responses from all the wise people and, depending on the collective opinion, collective intelligence, validates or eliminates it definitively.

12. The Method according to claims 1-11 in which a conditional is established in the algorithm that defines a time scheme, due to limited validity, or due to the accumulation of new questions that will drive out those that have been in the system for the longest time.

13. The Method according to claims 1-11 in which a discard method is applied after the validation of the questions and answers in which two thresholds are established in the algorithm, one lower and one higher, depending on their difficulty, so those questions that fall outside these two thresholds will be discarded by new questions.

14. A Computer program comprising instructions that, when the program is executed by the computer, cause the computer to carry out the method of claims 1-5.

15. A Data processing device comprising a data processor configured to execute the steps of the method of claim 1.
